# FASCICULE DE BREVET EUROPEEN

(11) **EP 1 273 480 B1**
(45) Date de publication et mention de la délivrance du brevet: **22.06.2005**
(21) Numéro de dépôt: 02291164.8
(22) Date de dépôt: 07.05.2002
(51) Int. Cl.: B60R 13/08, B62D 29/00

(54) **Dispositif d'isolation acoustique destiné à être monté dans une pièce tubulaire, en particulier d'une piece de carrosserie automobile.**
Schalldämmungsvorrichtung zum Einbau in ein rohrförmiges Teil, insbesondere ein Fahrzeugskarosserieteil
Acoustic insulation device for mounting in a tubular part, particularly in a bodywork part of a motor vehicle

(30) Priorité: 02.07.2001 FR 0108774
(43) Date de publication de la demande: 08.01.2003
(73) Titulaire: HUTCHINSON, 75008 Paris (FR)
(72) Inventeur: Ratet, Florence, 45120 Chalette Sur Loing (FR)
(74) Mandataire: Doireau, Marc

(56) Documents cités:
- WO-A-00/03894
- WO-A-01/83206
- WO-A-99/37506
- US-A- 5 642 914

## Description

L'invention concerne un dispositif d'isolation acoustique destiné à être monté dans une pièce tubulaire, en particulier d'une pièce de carrosserie automobile.

Une carrosserie d'automobile, en particulier sa caisse, comprend notamment des pièces tubulaires, telles des montants de baie, des longerons, ..., qui constituent des voies de passage importantes pour la propagation et la remontée de bruits divers jusqu'à l'habitacle du véhicule, ce qui nuit au confort des passagers.

L'isolation acoustique de ces pièces tubulaires pose donc un problème, sachant par ailleurs que ces pièces ont des formes diverses et variées avec des sections variables, et peuvent être constituées d'un assemblage de plusieurs pièces.

Pour limiter la propagation de ces bruits, les constructeurs automobiles pratiquent depuis longtemps une obturation de la section intérieure des pièces tubulaires par injection locale d'une composition expansible par voie chimique et destinée à créer une mousse qui vient au contact de la paroi interne des pièces pour former au moins une cloison acoustique. L'injection de la mousse est effectuée au travers d'un trou percé dans la pièce après la mise en peinture de la caisse du véhicule. Cette solution donne globalement satisfaction dans le cas où la pièce ou la partie de la pièce dans laquelle on désire implanter la cloison est globalement un tube à section droite sensiblement circulaire et de diamètre pas trop important. Cependant, cette solution présente l'inconvénient qu'un perçage après mise en peinture de la pièce est une opération supplémentaire et peut entraîner un risque de corrosion lorsque la pièce est métallique, et de nécessiter l'utilisation d'un matériel spécifique pour l'injection de la mousse.

On connaît du document US-A-5,642,914 un dispositif d'isolation acoustique comprenant un matériau expansible par voie thermique qui se présente globalement sous la forme d'un anneau plat rapporté sur le pourtour d'un insert de cloisonnement. Cet anneau est obtenu par extrusion ou par moulage en lui donnant par avance la forme du contour de l'insert de cloisonnement.

On connaît du document WO 01/83206 un dispositif d'isolation acoustique où le matériau expansible par voie thermique est moulé sur le pourtour d'un insert de cloisonnement ou se présente sous la forme d'une bande qui est fixée sur le pourtour dudit insert par collage ou au moyen d'agrafes.

On connaît également du document WO 99/37506 un dispositif d'isolation acoustique dont les caractéristiques ont été reprises dans le préambule de la revendication 1.

Un but de l'invention est de concevoir une nouvelle solution à ce problème de l'isolation acoustique de pièces tubulaires et qui soit apte à être appliquée d'une manière simple quelle que soit la forme de la section de la pièce d'isolation sur le plan acoustique.

A cet effet, l'invention propose un dispositif d'isolation acoustique destiné à être monté dans une pièce tubulaire, en particulier d'une pièce de carrosserie automobile, dispositif comprenant un insert de cloisonnement, un cordon d'une composition expansible par voie thermique pour former une mousse, ce cordon étant rapporté sur le pourtour de l'insert, des moyens de retenue du cordon sur l'insert avant expansion du cordon et des moyens pour favoriser l'expansion du cordon en direction de la paroi intérieure de la pièce tubulaire, le cordon étant fabriqué par extrusion et de manière rectiligne sans mise en forme particulière, les moyens de retenue du cordon étant venus de moulage avec l'insert de cloisonnement et assurant également la mise en forme du cordon extrudé sur le pourtour de l'insert de cloisonnement, caractérisé en ce que le cordon expansible a un taux de gonflement variable qui est choisi en fonction de l'espace à combler entre l'insert et la paroi intérieure de la paroi tubulaire.

Avantageusement, le cordon expansible est réalisé à partir d'un mastic en caoutchouc synthétique vulcanisable du type butyle, butyle halogéné ou nitrile, en polychloroprène ou en EPDM par exemple.

Selon un mode de réalisation, les moyens de retenue sont constitués par des crochets ayant une forme de gouttière qui sont disposés sur au moins une partie du pourtour de l'insert de cloisonnement de manière à permettre le démoulage dudit insert sans problème de contre-dépouille.

Avantageusement, les crochets de retenue sont disposés de part et d'autre de l'axe du cordon sans être en vis-à-vis.

D'une manière générale, les moyens pour favoriser l'expansion du cordon en direction de la paroi intérieure de la pièce tubulaire sont constitués par une paroi périphérique qui entoure l'insert de cloisonnement, et les moyens de retenue du cordon avant son expansion sont situés à l'extérieur de la paroi périphérique de l'insert.

Selon un mode de réalisation, l'insert a globalement une forme en H en section droite, avec une partie centrale et la paroi périphérique précitée qui s'étend de part et d'autre de la partie centrale pour former les moyens qui favorisent l'expansion du cordon en direction de la paroi intérieure de la pièce tubulaire.

Selon un autre mode de réalisation, l'insert de cloisonnement est constitué de deux plaques fixées l'une sur l'autre et séparées l'une de l'autre par une paroi latérale formant entretoise et délimitant une gorge périphérique apte à recevoir un cordon expansible, et des fuites sont prévues dans la paroi latérale pour éviter une déformation des plaques lors de l'expansion du cordon.

Un dispositif d'isolation acoustique selon l'invention offre notamment l'avantage d'éviter d'avoir à conformer le cordon thermiquement expansible selon la forme du contour de l'insert de cloisonnement avant de le rapporter sur celui-ci, et d'assurer la mise en forme et le maintien du jonc sans avoir recours à des moyens complémentaires, ce qui facilite les opérations de montage d'un tel jonc et de pouvoir facilement s'adapter à des inserts de cloisonnement de forme quelconque.

L'invention a également pour objet une pièce tubulaire, en particulier de carrosserie automobile, qui est caractérisée en ce qu'elle comprend un dispositif d'isolation acoustique ayant tout ou partie des caractéristiques précitées, l'expansion du cordon par voie thermique s'effectuant au cours de la mise en peinture de la pièce.

D'autres avantages, caractéristiques et détails de l'invention ressortiront du complément de description qui va suivre en référence à des dessins annexés, donnés uniquement à titre d'exemple et dans lesquels :
- la figure 1 est une vue en coupe schématique et partielle d'un dispositif d'isolation acoustique d'une pièce tubulaire, du type de celui évoqué au titre de l'art antérieur,
- la figure 2 est une vue en perspective pour illustrer un mode de réalisation d'un dispositif d'isolation acoustique selon l'invention, ce dispositif comprenant notamment un insert de cloisonnement et un cordon d'une matière expansible,
- la figure 3 est une vue en coupe suivant la ligne III-III de la figure 2 pour illustrer le dispositif d'isolation acoustique avant expansion du cordon,
- la figure 4 est une vue similaire à celle de la figure 3 après expansion du cordon,
- la figure 5 est une vue en coupe illustrant une variante pour fixer l'insert de positionnement,
- la figure 6 est une vue en coupe illustrant une autre variante pour fixer l'insert de positionnement, et
- la figure 7 est une vue en coupe illustrant un autre mode de réalisation d'un dispositif d'isolation acoustique selon l'invention.

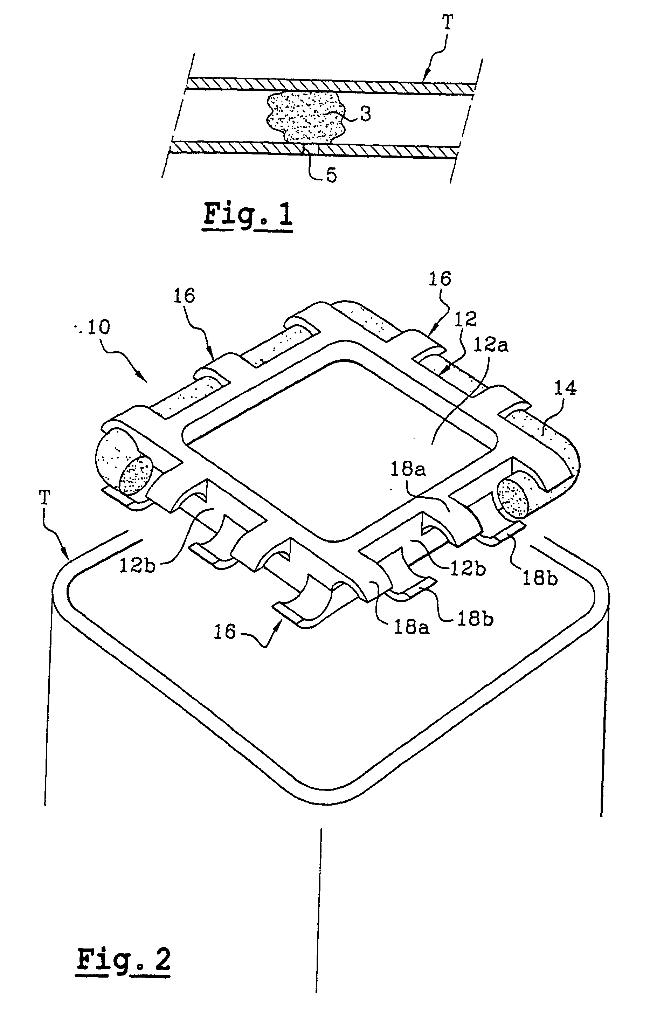

Selon l'art antérieur évoqué en préambule et tel qu'illustré à la figure 1, une pièce tubulaire T d'une carrosserie automobile est obturée localement et intérieurement par un bouchon de mousse 3 qui forme une cloison d'isolation acoustique pour éviter la propagation de bruits. Un trou 5 est percé dans la pièce T, et on injecte par ce trou 5 une composition expansible par voie chimique pour créer le bouchon de mousse 3.

Un mode de réalisation du dispositif d'isolation acoustique 10 selon l'invention est illustré aux figures 2 à 4. Ce dispositif d'isolation 10 est destiné à être monté à l'intérieur d'une pièce tubulaire T, et il comprend au moins un insert de cloisonnement 12, un cordon souple 14 d'une composition apte à s'expanser thermiquement pour former une mousse, et des moyens de retenue 16 du cordon 14 sur le pourtour de l'insert 12, avant l'expansion du cordon.

L'insert de cloisonnement 12 tel qu'illustré a une forme globalement rectangulaire, sachant que sa forme est conditionnée par celle de la section intérieure que présente la pièce tubulaire T dans la zone où l'insert 12 doit être monté.

L'insert de cloisonnement 12 présente une forme en H en section droite avec une partie centrale 12a qui est bordée sur tout son pourtour par une paroi périphérique 12b qui s'étend de part et d'autre de la partie centrale 12a. Cette paroi 12b forme un mur pour éviter une expansion du cordon 14 vers l'intérieur de l'insert 12 et favoriser ainsi son expansion en direction de la paroi intérieure de la pièce tubulaire T. Les moyens de retenue 16 du cordon 14 sont donc situés à l'extérieur de la paroi périphérique 12b.

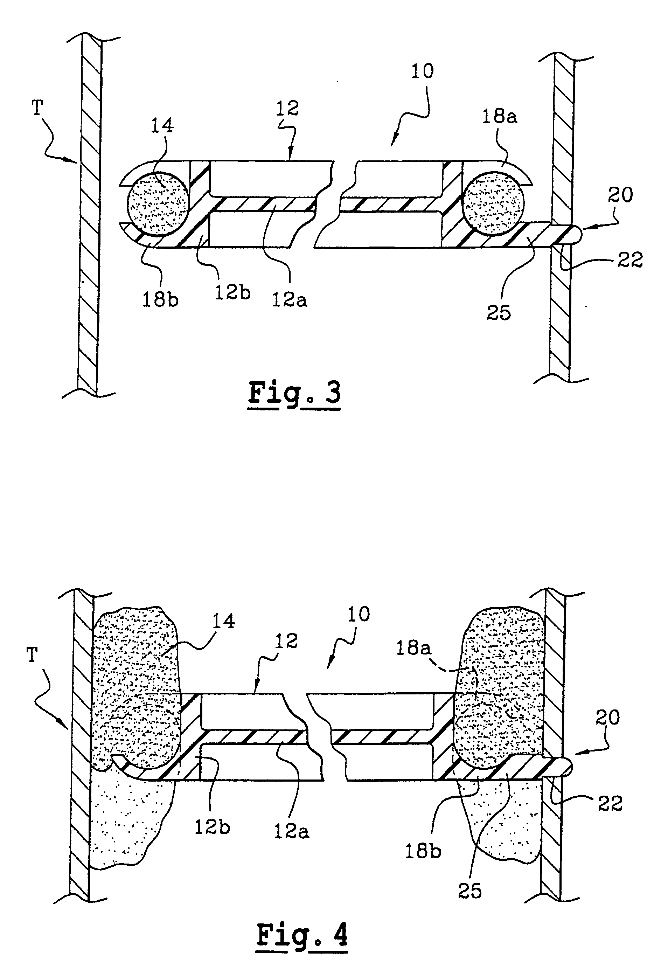

Par ailleurs, l'insert 12 présente des dimensions extérieures qui sont inférieures à celles de la section intérieure de la pièce tubulaire T, de manière à pouvoir rapporter le cordon 14 d'une part, et ménager un espace périphérique (figure 3) qui sera ensuite comblé par la mousse (figure 4) résultant de l'expansion par effet thermique du cordon 14 d'autre part.

Les moyens de retenue 16 du cordon 14 ont pour fonction de maintenir le cordon 14 au cours des opérations de manipulation et de montage de l'insert, sachant que l'expansion par voie thermique du cordon n'interviendra qu'ultérieurement lors de l'opération de mise en peinture de la caisse du véhicule où la température de l'ordre de 150°C à 200°C sera suffisante pour assurer son expansion. Le cordon 14 est avantageusement fabriqué par extrusion sous la forme d'un profilé sensiblement rectiligne sans mise en forme particulière, et les moyens de retenue 16 ont également pour fonction d'assurer la mise en forme du cordon 14 sur le pourtour de l'insert de cloisonnement 12.

Par ailleurs, les moyens de retenue 16 ne doivent pas s'opposer à l'expansion du cordon 14, c'est-à-dire que la mousse résultant de cette expansion doit venir au contact de la paroi intérieure de la pièce tubulaire T sur tout le pourtour de l'insert 12 à la manière d'un joint d'étanchéité.

Pour satisfaire à ces conditions, les moyens de retenue 16 ont une forme appropriée qui se combine avec la paroi périphérique 12b de l'insert 12 pour favoriser l'expansion du cordon 14 vers la paroi intérieure de la pièce tubulaire T. D'une manière générale, les moyens de retenue 16 sont situés à l'extérieur de la paroi 12b. Dans l'exemple illustré sur les dessins, les moyens de retenue 16 comprennent au moins des crochets 18a et 18b présentant une forme de gouttière qui est ouverte en direction de la paroi intérieure de la pièce tubulaire T pour favoriser l'expansion du cordon 14 dans cette direction. En considérant l'un des côtés de la plaque formée par l'insert 12, les crochets 18a et 18b sont respectivement disposés de part et d'autre du cordon 14 et d'une manière alternée, de manière à ce que deux crochets 18a et 18b ne se retrouvent pas en vis-à-vis (figure 2). Les crochets 18a et 18b peuvent être ou non régulièrement espacés, leur disposition pouvant varier en fonction de la forme de l'insert.

Par ailleurs, les moyens de retenue 16 ne se limitent pas à des crochets 18a et 18b du type de ceux illustrés sur les dessins, c'est-à-dire que pour un même insert 12 on peut avoir des moyens de retenue qui sont différents, sachant qu'une forme en gouttière est privilégiée. A titre d'exemple, les moyens de retenue 16 sur au moins un côté de la plaque formée par l'insert 12 peuvent être constitués par une gouttière qui s'étend sensiblement sur toute la longueur dudit côté.

Selon un mode de réalisation préférentiel de réalisation, l'insert de cloisonnement 12 est réalisé en une matière thermoplastique telle qu'un polyamide par exemple, et les moyens de retenue 16 sont venus de moulage avec l'insert 12. Autrement dit, les crochets 18a et 18b sont disposés de manière à permettre le démoulage de l'insert 12 sans problème de contre-dépouille.

L'insert de cloisonnement 12 doit avoir une forme adaptée à celle de la pièce tubulaire dans laquelle il est monté, ce qui conduit à des formes variables qui ne se limitent pas à celle d'une plaque carrée ou rectangulaire.

Le cordon 14 est avantageusement réalisé à partir d'un caoutchouc synthétique vulcanisable du type butyle, butyle halogéné ou nitrile, en polychloroprène ou en EPDM par exemple, c'est-à-dire en une matière autre qu'un thermoplastique. En section droite, le cordon 14 peut avoir une forme quelconque, le plus souvent carrée ou circulaire.

D'une manière générale, on peut faire varier le taux d'expansion ou de gonflement du cordon 14 en fonction de l'espace à combler entre l'insert 12 et la paroi intérieure de la pièce tubulaire T. En effet, cet espace peut varier d'une pièce à l'autre avec des tolérances d'assemblage plus ou moins critiques.

Pour faire varier le taux d'expansion ou de gonflement du cordon 14, il suffit d'y ajouter un agent gonflant selon une quantité qui est fonction du taux d'expansion voulu. A titre d'exemple, on peut choisir un taux d'expansion important de l'ordre de 1 000% à 1 400% pour un diamètre du cordon 14 de l'ordre de 5mm à 7mm dans le cas où l'espace à combler entre l'insert 12 et la paroi interne de la pièce tubulaire T peut être relativement important. Par contre, un taux d'expansion de l'ordre de 100% à 500% pour un diamètre de cordon inférieur à 4mm peut être suffisant lorsque l'espace à combler est faible.

La fixation de l'insert de cloisonnement 12 à l'intérieur de la pièce tubulaire T peut être réalisée de plusieurs façons. Dans le cas d'un insert 12 en matière thermoplastique, la fixation peut s'envisager au moyen d'au moins une patte élastique 20 formant un clip qui est engagé dans un trou 22 percé dans la pièce tubulaire T. Comme cela est illustré sur les figures 3 et 7, cette patte élastique 20 est située à l'extrémité d'un bras de support 25 latéral qui prolonge localement la paroi périphérique 12b de l'insert. Avantageusement, cette patte 20 et son bras de support 25 sont venus de moulage avec l'insert 12. Dans ce mode de fixation, le trou 22 percé dans la pièce tubulaire T est situé du côté de la source de bruits.

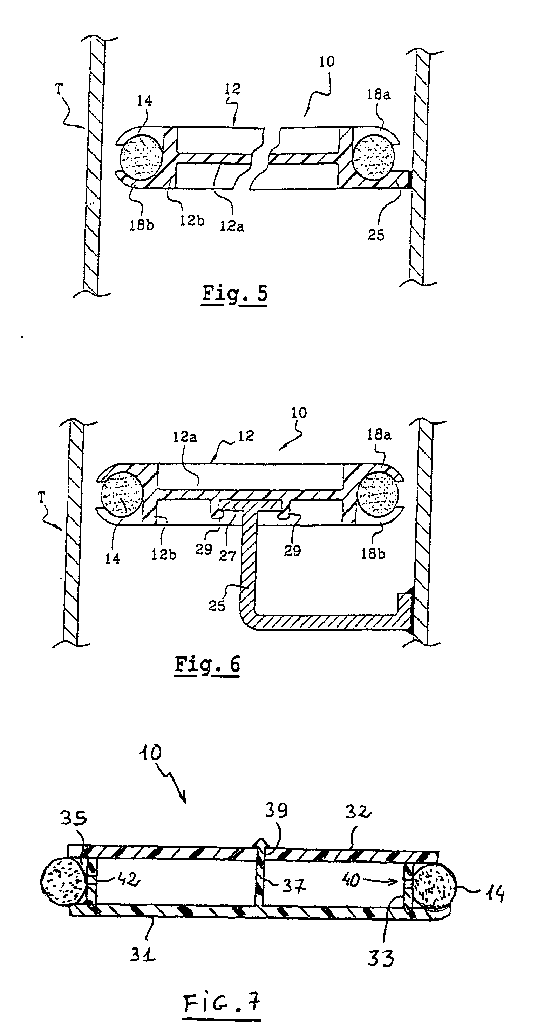

Selon une variante illustrée à la figure 5, on peut supprimer la patte élastique de fixation 20 en procédant à une opération de collage du bras 25, ce qui évite de percer un trou dans la pièce tubulaire T.

Selon une autre variante illustrée à la figure 6, la fixation de l'insert 12 est faite par soudage au moyen d'un bras de support métallique 25 qui se raccorde à l'insert 12 au moyen d'une plaque 27 montée dans un rail délimité par deux nervures 29 en saillie à une face de la partie centrale 12a de l'insert 12.

Par ailleurs, on peut envisager l'utilisation d'un insert de cloisonnement métallique avec notamment deux solutions pour réaliser les moyens de retenue. Selon la première solution, les moyens de retenue sont formés directement à la périphérie de l'insert, ce qui nécessite des opérations d'emboutissage et de découpe. Selon la seconde solution, les moyens de retenue sont réalisés en matière plastique et rapportés sur le pourtour de l'insert par collage, soudage, pincement, encliquetage ou analogue.

D'une manière générale, lorsque la pièce tubulaire T est constituée de l'assemblage de plusieurs pièces, on peut fixer l'insert de cloisonnement 12 sur au moins l'une des pièces avant l'assemblage de celles-ci. Par contre, lorsque la pièce tubulaire T est d'une seule pièce, on monte l'insert de cloisonnement 12 vers une extrémité de ladite pièce.

Selon un autre mode de réalisation illustré sur la figure 7, l'insert de cloisonnement 12 est constitué de deux pièces en matière thermoplastique qui sont assemblées l'une à l'autre par collage ou clippage. Plus précisément, la première pièce est une plaque 31 avec en saillie sur une face une paroi latérale 33 située à distance du bord périphérique de la plaque 31, et la seconde pièce est une plaque 32 rapportée la paroi 33. Les deux plaques 31 et 32 ainsi assemblées et d'une épaisseur de l'ordre du millimètre, délimitent une gorge périphérique 35 apte à recevoir le cordon 14. La fixation entre les deux plaques 31 et 32 est assurée par au moins un clip 37 par exemple venu d'une seule pièce avec la plaque 31 et qui pénètre dans une ouverture 39 percée dans la plaque 32.

Avantageusement, on prévoit des fuites 40 au niveau de la paroi latérale 33 pour éviter que le gonflement du cordon 14 n'entraîne une déformation des plaques 31 et 32.

Ces fuites 40 peuvent être réalisées sous la forme d'ouvertures 42 ménagées dans la paroi latérale 33 ou par une discontinuité de ladite paroi. Ces fuites 40 sont de préférence situées dans des zones rectilignes de l'insert 12 qui ne constituent pas des zones critiques.

Des moyens de retenue du cordon 14 par des crochets tels que ceux envisagés pour le premier mode de réalisation sont particulièrement bien adaptés pour mettre en forme et retenir un cordon relativement épais et donc assez raide lorsque l'espace à combler est relativement important. Par contre, lorsque l'espace à combler est moindre, on peut utiliser un cordon moins épais et donc plus souple. Dans ce cas, les moyens de retenue peuvent être d'une conception plus simple. A titre d'exemple, comme cela est illustré sur la figure 7, ces moyens de retenue peuvent être réalisés par un simple rebord périphérique 45 éventuellement discontinu entourant la plaque 31.

Jusqu'à maintenant, on a considéré que les moyens de retenue du cordon de mastic sont à même de le maintenir sur le pourtour de l'insert de cloisonnement sans qu'il soit nécessaire de prévoir un moyen de fixation quelconque. Cependant, on peut éventuellement envisager de prévoir au moins des points de fixation par collage par exemple du cordon de mastic sur l'insert de cloisonnement.

## Revendications

1. Dispositif d'isolation acoustique destiné à être monté dans une pièce tubulaire, en particulier d'une pièce de carrosserie automobile, dispositif comprenant un insert de cloisonnement (12), un cordon (14) d'une composition expansible par voie thermique pour former une mousse, ce cordon (14) étant rapporté sur le pourtour de l'insert (12), des moyens de retenue (16) du cordon (14) sur l'insert (12) avant expansion du cordon (14) et des moyens (12b) pour favoriser l'expansion du cordon (14) en direction de la paroi intérieure de la pièce tubulaire (T), le cordon (14) étant fabriqué par extrusion et de manière rectiligne sans mise en forme particulière, et les moyens de retenue (16) du cordon étant venus de moulage avec l'insert de cloisonnement (12) et assurant également la mise en forme du cordon extrudé sur le pourtour de l'insert de cloisonnement (12), **caractérisé en ce que** le cordon expansible (14) a un taux de gonflement variable qui est choisi en fonction de l'espace à combler entre l'insert (12) et la paroi intérieure de la paroi tubulaire (T).

2. Dispositif selon la revendication 1, **caractérisé en ce que** le cordon expansible (14) est un mastic en caoutchouc synthétique vulcanisable du type butyle, butyle halogéné ou nitrile, en polychloroprène, en EPDM par exemple.

3. Dispositif selon la revendication 1 ou 2, **caractérisé en ce que** le taux de gonflement du cordon expansible (14) est de l'ordre de 1 000% à 1 400%, et **en ce que** le diamètre du cordon (14) est de l'ordre de 5mm à 7mm.

4. Dispositif selon la revendication 1 ou 2, **caractérisé en ce que** le taux de gonflement du cordon expansible (14) est de l'ordre de 100% à 500%, et **en ce que** le diamètre du cordon (14) est inférieur à 4mm.

5. Dispositif selon l'une quelconque des revendications précédentes, **caractérisé en ce que** les moyens de retenue (16) comprennent au moins des crochets (18a, 18b) ayant une forme de gouttière et sont disposés sur au moins une partie du contour de l'insert de cloisonnement (12) de manière à permettre le démoulage dudit insert sans problème de contre-dépouille.

6. Dispositif selon la revendication 5, **caractérisé en ce que** les crochets (18a, 18b) de retenue sont disposés de part et d'autre de l'axe du cordon (14) sans être en vis-à-vis.

7. Dispositif selon l'une quelconque des revendications précédentes, **caractérisé en ce que** les moyens (12b) pour favoriser l'expansion du cordon (14) en direction de la paroi intérieure de la pièce tubulaire (T) sont constitués par une paroi périphérique qui entoure l'insert de cloisonnement (12), et **en ce que** les moyens de retenue (16) du cordon (14) avant son expansion sont situés à l'extérieur de la paroi périphérique (12b) de l'insert.

8. Dispositif selon la revendication 7, **caractérisé en ce que** l'insert (12) a globalement une forme en H en section droite, avec une partie centrale (12a) et la paroi périphérique (12b) qui s'étend de part et d'autre de la partie centrale pour former les moyens qui favorisent l'expansion du cordon (14) en direction de la paroi intérieure de la pièce tubulaire (T).

9. Dispositif selon l'une quelconque des revendications 1 à 4, **caractérisé en ce que** l'insert de cloisonnement (12) est constitué de deux plaques (31, 32) fixées l'une sur l'autre et séparées l'une de l'autre par une paroi latérale (33) formant entretoise et délimitant une gorge périphérique (35) apte à recevoir un cordon expansible (14), et **en ce que** des fuites (40) sont prévues dans la paroi latérale (33) pour éviter une déformation des plaques (31, 32) lors de l'expansion du cordon (14).

10. Dispositif selon l'une quelconque des revendications précédentes, **caractérisé en ce que** l'insert (12) est réalisé en une matière thermoplastique telle que du polyamide.

11. Dispositif selon l'une quelconque des revendications précédentes, **caractérisé en ce que** l'insert (12) est fixé à la pièce tubulaire (T) au moyen d'au moins une patte flexible (20) qui est engagée dans un trou (22) percé dans la pièce tubulaire (T).

12. Dispositif selon la revendication 11, **caractérisé en ce que** la patte flexible (20) de fixation est à l'extrémité d'un bras de support (25) solidaire de l'insert (12).

13. Dispositif selon la revendication 11 ou 12, **caractérisé en ce que** la patte de fixation (20) est le bras de support (25) sont venus de moulage avec l'insert (12).

14. Dispositif selon l'une quelconque des revendications 1 à 12, **caractérisé en ce que** l'insert (12) est fixé à la pièce tubulaire (T) par collage ou soudage.

15. Pièce tubulaire, en particulier de carrosserie automobile, **caractérisée en ce qu'**elle comprend un dispositif d'isolation acoustique (10) tel que défini par l'une quelconque des revendications précédentes.

16. Pièce tubulaire selon la revendication 15, **caractérisée en ce que** l'expansion du cordon (14) par voie thermique s'effectue au cours de la mise en peinture de la pièce.

## Patentansprüche

1. Schalldämmungsvorrichtung, die dazu bestimmt ist, in ein röhrenförmiges Teil, insbesondere eines Fahrzeugkarosserieteils, eingesetzt zu werden, und die einen Unterteilungseinsatz (12), einen Strang (14) aus einer durch Wärme ausdehnbaren Zusammensetzung zur Bildung eines Schaums, wobei dieser Strang (14) an den Umfang des Einsatzes (12) angesetzt ist, Mittel (16) zum Halten des Strangs (14) an dem Einsatz (12) vor der Ausdehnung des Strangs (14), sowie Mittel (12b) zur Begünstigung der Ausdehnung des Strangs (14) in Richtung auf die Innenwand des röhrenförmigen Teils (T) umfasst, wobei der Strang (14) durch Extrudieren und geradlinig ohne besondere Formung hergestellt ist, und wobei die Mittel (16) zum Halten des Strangs aus einem Stück mit dem Unterteilungseinsatz (12) gegossen werden und auch die Formung des extrudierten Strangs an dem Umfang des Unterteilungseinsatzes (12) sicherstellen, **dadurch gekennzeichnet, dass** der ausdehnbare Strang (14) einen variablen Quellungsgrad aufweist, welcher in Abhängigkeit von dem zwischen dem Einsatz (12) und der Innenwand des röhrenförmigen Teils (T) zu füllenden Raum gewählt wird.

2. Vorrichtung nach Anspruch 1, **dadurch gekennzeichnet, dass** der ausdehnbare Strang (14) ein Kitt aus vulkanisierbarem synthetischem Kautschuk vom Typ Butyl, Halogenbutyl oder Nitril, beispielsweise aus Polychloropren, aus EPDM ist.

3. Vorrichtung nach Anspruch 1 oder 2, **dadurch gekennzeichnet, dass** der Quellungsgrad des ausdehnbaren Strangs (14) in der Größenordnung von 1 000% bis 1 400% liegt und dass der Durchmesser des Strangs (14) in der Größenordnung von 5 mm bis 7 mm liegt.

4. Vorrichtung nach Anspruch 1 oder 2, **dadurch gekennzeichnet, dass** der Quellungsgrad des ausdehnbaren Strangs (14) in der Größenordnung von 100% bis 500% liegt und dass der Durchmesser des Strangs (14) geringer als 4 mm ist.

5. Vorrichtung nach irgendeinem der vorhergehenden Ansprüche, **dadurch gekennzeichnet, dass** die Haltemittel (16) wenigstens Haken (18a, 18b) mit Rinnenform aufweisen und an wenigstens einem Teil des Umfangs des Unterteilungseinsatzes (12) angeordnet sind, so dass das Ausformen des Einsatzes ohne Hinterschneidungsprobleme ermöglicht wird.

6. Vorrichtung nach Anspruch 5, **dadurch gekennzeichnet, dass** die Haltehaken (18a, 18b) auf beiden Seiten der Achse des Strangs (14) angeordnet sind, ohne einander gegenüber zu liegen.

7. Vorrichtung nach irgendeinem der vorhergehenden Ansprüche, **dadurch gekennzeichnet, dass** die Mittel (12b) zur Begünstigung der Ausdehnung des Strangs (14) in Richtung auf die Innenwand des röhrenförmigen Teils (T) von einer Umfangswand gebildet sind, welche den Unterteilungseinsatz (12) umgibt, und dass die Mittel (16) zum Halten des Strangs (14) vor dessen Ausdehnung außerhalb der Umfangswand (12b) des Einsatzes angeordnet sind.

8. Vorrichtung nach Anspruch 7, **dadurch gekennzeichnet, dass** der Einsatz (12) im Allgemeinen im Querschnitt eine H-Form aufweist, mit einem Mittelteil (12a) und der Umfangswand (12b), die sich auf beiden Seiten des Mittelteils erstreckt, um die Mittel zu bilden, welche die Ausdehnung des Strangs (14) in Richtung auf die Innenwand des röhrenförmigen Teils (T) begünstigen.

9. Vorrichtung nach irgendeinem der Ansprüche 1 bis 4, **dadurch gekennzeichnet, dass** der Unterteilungseinsatz (12) von zwei Platten (31, 32) gebildet ist, die aneinander befestigt sind und die durch eine einen Steg bildende Seitenwand (33), welche eine Umfangsnut (35) begrenzt, die geeignet ist, einen ausdehnbaren Strang (14) aufzunehmen, voneinander getrennt sind, und dass Spalten (40) in der Seitenwand (33) vorgesehen sind, um eine Verformung der Platten (31, 32) während des Ausdehnens des Strangs (14) zu vermeiden.

10. Vorrichtung nach irgendeinem der vorhergehenden Ansprüche, **dadurch gekennzeichnet, dass** der Einsatz (12) aus einem Thermoplasten, wie Polyamid gefertigt ist.

11. Vorrichtung nach irgendeinem der vorhergehenden Ansprüche, **dadurch gekennzeichnet, dass** der Einsatz (12) mittels wenigstens einer flexiblen Lasche (20), die in ein in dem röhrenförmigen Teil (T) ausgebildetes Loch (22) eingesteckt ist, an dem röhrenförmigen Teil (T) befestigt ist.

12. Vorrichtung nach Anspruch 11, **dadurch gekennzeichnet, dass** sich die flexible Befestigungslasche (20) am Ende eines mit dem Einsatz (12) fest verbundenen Tragarms (25) befindet.

13. Vorrichtung nach Anspruch 11 oder 12, **dadurch gekennzeichnet, dass** die Befestigungslasche (20) und der Tragarm (25) aus einem Stück mit dem Einsatz (12) gegossen sind.

14. Vorrichtung nach irgendeinem der Ansprüche 1 bis 12, **dadurch gekennzeichnet, dass** der Einsatz (12) durch Kleben oder Schweißen an dem röhrenförmigen Teil (T) befestigt ist.

15. Röhrenförmiges Teil, insbesondere einer Fahrzeugkarosserie, **dadurch gekennzeichnet, dass** es eine Schalldämmungsvorrichtung (10) aufweist, wie sie durch irgendeinen der vorhergehenden Ansprüche definiert ist.

16. Röhrenförmiges Teil nach Anspruch 15, **dadurch gekennzeichnet, dass** die Ausdehnung des Strangs (14) durch Wärme während des Anstreichens des Teils erfolgt.

## Claims

1. A sound insulation device for mounting in a tubular part, in particular a motor vehicle bodywork part, the device comprising a partitioning insert (12), a cord (14) of a composition that is thermally expandable so as to form a foam, said cord (14) being fitted to the periphery of the insert (12), retaining means (16) for holding the cord (14) on the insert (12) prior to expansion of the cord (14), and means (12b) for encouraging the cord (14) to expand towards the inside wall of the tubular part (T), the cord (14) being formed by being extruded in rectilinear manner without any particular shaping, and the cord retaining means (16) being integrally molded with the partitioning insert (12) and also serving to shape the extruded cord around the periphery of the partitioning insert (12), the device being **characterized in that** the expandable cord (14) presents a variable swelling ratio which is selected as a function of the space to be filled between the insert (12) and the inside wall of the tubular part (T).

2. A device according to claim 1, **characterized in that** the expandable cord (14) is made of a vulcanizable synthetic rubber mastic of the butyl, halogenated butyl, or nitrile type, of polychloroprene, or of EPDM, for example.

3. A device according to claim 1 or claim 2, **characterized in that** the swelling ratio of the expandable cord (14) is about 1000% to 1400%, and **in that** the diameter of the cord (14) is about 5 mm to 7 mm.

4. A device according to claim 1 or claim 2, **characterized in that** the swelling ratio of the expandable cord (14) is about 100% to 500%, and **in that** the diameter of the cord (14) is less than 4 mm.

5. A device according to any preceding claim, **characterized in that** the retaining means (16) comprise at least hooks (18a, 18b) of gutter shape and disposed on at least a fraction of the outline of the partitioning insert (12) in such a manner as to enable said insert to be unmolded without any undercut problem.

6. A device according to claim 5, **characterized in that** the retaining hooks (18a, 18b) are disposed on either side of the axis of the cord (14) without facing one another.

7. A device according to any preceding claim, **characterized in that** the means (12b) for encouraging the cord (14) to expand towards the inside wall of the tubular part (T) are constituted by a peripheral wall surrounding the partitioning insert (12), and **in that** the retaining means (16) for retaining the cord (14) prior to expansion thereof are situated at the outside of the peripheral wall (12b) of the insert.

8. A device according to claim 7, **characterized in that** the insert (12) is generally H-shaped in right section, with a central portion (12a) and the peripheral wall (12b) which extends on either side of the central portion to form the means which encourage the cord (14) to expand towards the inside wall of the tubular part (T).

9. A device according to any one of claims 1 to 4, **characterized in that** the partitioning insert (12) is constituted by two plates (31, 32) fixed to each other and faced apart from each other by a spacer-forming side wall (33) defining a peripheral groove (35) suitable for receiving an expandable cord (14), and **in that** leaks (40) are provided through the side wall (33) to prevent the plates (31, 32) deforming while the cord (14) is expanding.

10. A device according to any preceding claim, **characterized in that** the insert (12) is made of a thermoplastic material such as polyamide.

11. A device according to any preceding claim, **characterized in that** the insert (12) is fixed to the tubular part (T) by means of at least one flexible tab (20) which is engaged in a hole (22) pierced in the tubular part (T).

12. A device according to claim 11, **characterized in that** the flexible fixing tab (20) is at the end of a support arm (25) secured to the insert (12).

13. A device according to claim 11 or claim 12, **characterized in that** the fixing tab (20) and the support arm (25) are integrally molded with the insert (12).

14. A device according to any one of claims 1 to 12, **characterized in that** the insert (12) is fastened to the tubular part (T) by adhesive or by soldering or by welding.

15. A tubular part, in particular a motor vehicle bodywork part, **characterized in that** it includes a sound insulation device (10) as defined by any preceding claim.

16. A tubular part according to claim 15, **characterized in that** the cord (14) is expanded thermally while the part is being painted.
